# EUROPEAN PATENT SPECIFICATION

(11) **EP 4 412 144 B1**
(45) Date of publication and mention of the grant of the patent: **04.11.2026**
(21) Application number: 22875240.8
(22) Date of filing: 22.09.2022
(51) Int. Cl.: H04L 9/08, H04B 10/70

(54) **CONTINUOUSLY VARIABLE QUANTUM KEY TRANSMITTER**
KONTINUIERLICH VARIABLER QUANTENSCHLÜSSELSENDER
TRANSMETTEUR DE CLÉ QUANTIQUE À VARIABLE CONTINUE

(30) Priority: 28.09.2021 ES 202100100
(43) Date of publication of application: 07.08.2024
(73) Proprietor: Universidade de Vigo, 36310 Vigo, Pontevedra (ES)
(72) Inventor: DIAZ OTERO, Francisco Javier, 36310 VIGO (ES); ALVAREZ OUTERELO, David, 36310 VIGO (ES)
(74) Representative: Herrero & Asociados, S.L.
(86) International application number: PCT/ES2022/070606
(87) International publication number: WO 2023/052665

(56) References cited:
- EP-A1- 3 335 368
- WO-A1-2016/099565
- WO-A1-2016/099565
- US-B1- 9 906 311
- FEIHU XU ET AL: "Secure quantum key distribution with realistic devices", ARXIV.ORG, CORNELL UNIVERSITY LIBRARY, 201 OLIN LIBRARY CORNELL UNIVERSITY ITHACA, NY 14853, 21 March 2019 (2019-03-21), XP081587520
- ZHANG G.; CAO L.; HAW J. Y.; JIA X. J.; SU X. L.; KWEK L. C.; FITZSIMONS J. F.; LAM P. K.; ZHOU X. Q.; GAO W. B.; GONG J. B.; CHON: "Integrated Chip for Continuous-variable Quantum Key Distribution using Silicon Photonic Fabrication", 2018 CONFERENCE ON LASERS AND ELECTRO-OPTICS (CLEO), OSA, 13 May 2018 (2018-05-13), pages 1 - 2, XP033380911
- ERVEN C.; SIBSON P.; SANTAGATI R.; SILVERSTONE J.W.; WANG J.; BONNEAU D.; O&APOS;BRIEN J.L.; THOMPSON M.G.: "Chip-scale integrated quantum technologies", 2015 PHOTONICS NORTH, IEEE, 9 June 2015 (2015-06-09), pages 1 - 1, XP032962217, DOI: 10.1109/PN.2015.7569202
- THOMPSON MARK G.: "Large-Scale Integrated Quantum Photonic Technologies for Communications and Computation", 2019 OPTICAL FIBER COMMUNICATIONS CONFERENCE AND EXHIBITION (OFC), OSA, 3 March 2019 (2019-03-03), pages 1 - 3, XP033540624

## Description

### OBJECT OF THE INVENTION

The present invention is related to the industry dedicated to the manufacture of optical integrated circuits or photonic integrated circuits (PIC).

The present invention relates to quantum key distribution devices (QKD) and, more particularly, to a QKD transmitter integrated into a photonic circuit.

### BACKGROUND OF THE INVENTION

Communications security is a technological area in constant evolution and innovation, from the appearance of the first mono-alphabetic substitution ciphers used by the Hebrews to current methods, such as those nowadays allowing secure wireless communications such as Wi-Fi. All of these systems have a common and welldifferentiated part: the coding of information using a key that both the sender and the receiver know and which allows the coding and decoding of the information by both members. This key is either known in advance or must be transmitted between the members of the communication at least once for them to be able to communicate. Quantum Key Distribution (QKD) can be defined as a secure communication method implementing a cryptographic protocol that involves components of quantum mechanics. It allows two parties to produce a shared random secret key known only to them, which can then be used to encrypt and decrypt messages.

There are different types of quantum key transmitters and their properties are given below:
- Continuous Variable Quantum Key Distribution Transmitter (CVQKD): Transmission of the quantum key is made by encoding the information in lowpower bursts. Each symbol to be transmitted is quantized in a succession of between 10 and 30 photons, so that powers of around micro watts are handled.
- Discrete Variable Quantum Key Distribution Transmitter (DVQKD): Transmission is carried out using photons. The information is encoded using the quantum properties of photons, in such a way that each symbol to be transmitted is encoded in a photon and in one of its properties such as, for example, its polarization.

Considering the types of quantum key transmitters described above and their properties, the claim that quantum key transmitters are the future of cybersecurity is not surprising.

Currently there are different commercial QKD transmitter systems, however, most of these use discrete and large devices, as the system is not integrated into a monolithic block. Thus, existing QKD transmitter systems require relatively large dimensions and make their integration impossible when small dimensions are needed, as in the case of satellites, portable communication devices or even in the Internet of Things (IoT).

The objective technical problem that arises is to provide in a monolithic block an integrated transmitter for the distribution of the key that allows encrypted communication between the interlocutors in a secure way through quantum physical phenomena.

### DESCRIPTION OF THE INVENTION

The present invention serves to solve the problem mentioned above, by providing an encoding device based on the coding of information by using an IQ modulation of super attenuated photon bursts (of around 20 micro watts of power), integrating all components into a single monolithic indium phosphide (InP) photonic circuit.

This device has a distributed feedback laser or DFB integrated into the chip itself, which provides the necessary optical power (preferably, around 6 milliwatts), which saves having to than drastically attenuate the power as in the case of using external lasers. This optical power is divided/split into two branches: i) the power of the lower branch acts as a pilot and mixes with the modulated signal just before the optical output and ii) the optical power in the upper branch will be used to perform IQ modulation using an amplitude modulator implemented with a symmetrical Mach-Zehnder interferometer followed by an optical phase modulator designed for a maximum phase variation of 3 pi.

Integrated photonics makes it possible to achieve dimensions of millimeters and due to the type of platform, the integration of complex elements such as lasers and lightreceiving photodiodes on the same chip is achieved.

Once the information has been encoded in the optical signal, this signal is sent off the chip using a spot size converter or SSC.

One aspect of the invention relates to a continuous variable type quantum key transmitter device comprising, the following components integrated within an indium phosphide (InP) chip:
- an integrated optical source, comprising a distributed feedback laser, to deliver an optical power signal at an output of the optical source;
- a double output, with an upper output branch and a lower output branch, where the double output consists of (i) an optical output and (ii) an electrical output for the transmission, optical and electrical respectively, of the quantum key;
- a modulation stage, connected to the output of the optical source, which includes a modulator amplitude implemented by a balanced Mach-Zehnder interferometer and a phase modulator, connected in series to deliver a modulated signal on the upper branch of the double output;
- one more power splitters to divert to the lower branch of the double output part of the optical power signal acting as a pilot, part that is mixed (in the lower branch) with the modulated signal coming from the upper branch of the double output;
- a homodyne detector to balance the optical output.

The advantages of the present invention compared to the prior art and in relation to currently existing integrated devices are fundamentally:
- Integration into the light source chip itself: The DFB laser integrated into the chip provides the necessary optical power, which is one of the main advantages when using the indium phosphide (InP) platform, since other platforms, such as silicon, do not allow this integration and require an external laser that greatly increases the dimensions of the device.
- The use of a continuous variable instead of a single photon greatly simplifies the receiver, not being necessary to use receivers cooled to a very low temperature to favor superconduction and reduce system noise. The continuous variable model uses this system's own noise to detect the interception of the key transmission, which provides an additional layer of security.
- This device is manufactured in indium phosphide (InP) technology on a commercial, repeatable, standardized and highly reliable integrated monolithic platform.
- The chip in which this device is contained has electrical inputs and outputs and all the required components built in. Therefore, from the electrical pins or pads outwards, it can be operated and wired like a normal electronic chip, despite using photonics inside.
- Integrated optical and electrical output: The device has a double output that can be used for optical or electrical transmission of the key.
- Integration of a homodyne receiver: The design includes a homodyne receiver that can be used for random number generation.
- All electro-optical modules used on the chip are current controlled, allowing for higher bit rates and a much faster tuning response than other thermo-optical devices.
- Simplicity of design: The basic structure used for both the construction of the amplitude modulator and the adjustable power splitters is the same. This structure is a balanced Mach-Zehnder interferometer in which only the last element (MMI) is changed.
- The device is tunable within its spectral free range, allowing adjustment of the generated bit rate by appropriately tuning the asymmetric Mach-Zehnder interferometer used as the amplitude modulator.
- The device operates in the megahertz (MHz) regime sufficient for key generation.
- Super small dimensions. The overall dimensions of the device are, in a preferred embodiment, approximately 2 x 12 mm, providing a high integration capacity.

### BRIEF DESCRIPTION OF THE FIGURES

Next, a series of drawings that help to better understand the invention and that are expressly related to an embodiment of said invention that is presented as a nonlimiting example of it are briefly described.
FIGURE 1.- Shows a block diagram of the architecture of a quantum key transmitter device integrated into a chip, according to a preferred embodiment of the invention.
FIGURE 2.- Shows a block diagram of the structure of the variable power splitter included in the integrated device.
FIGURE 3.- Shows a block diagram of the structure of the amplitude modulator included in the integrated device.
FIGURE 4.- Shows a chip with the integrated transmitter device and a test circuit part of the device.

### PREFERRED EMBODIMENT OF THE INVENTION

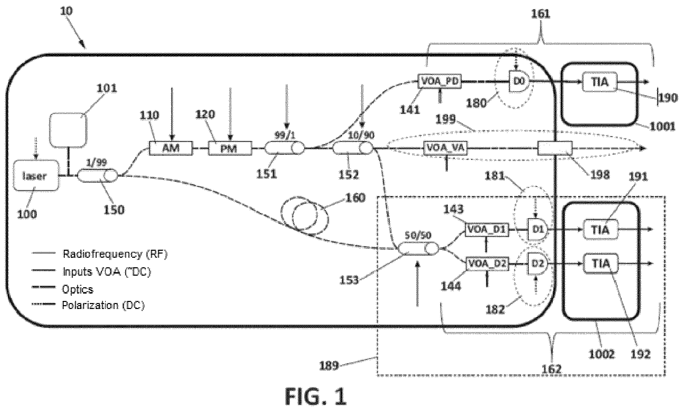

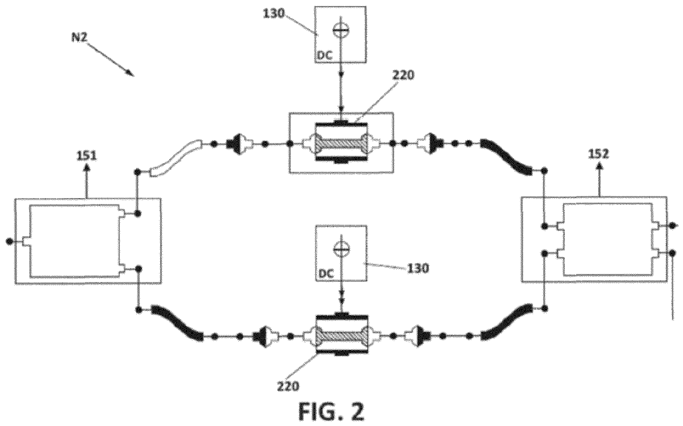

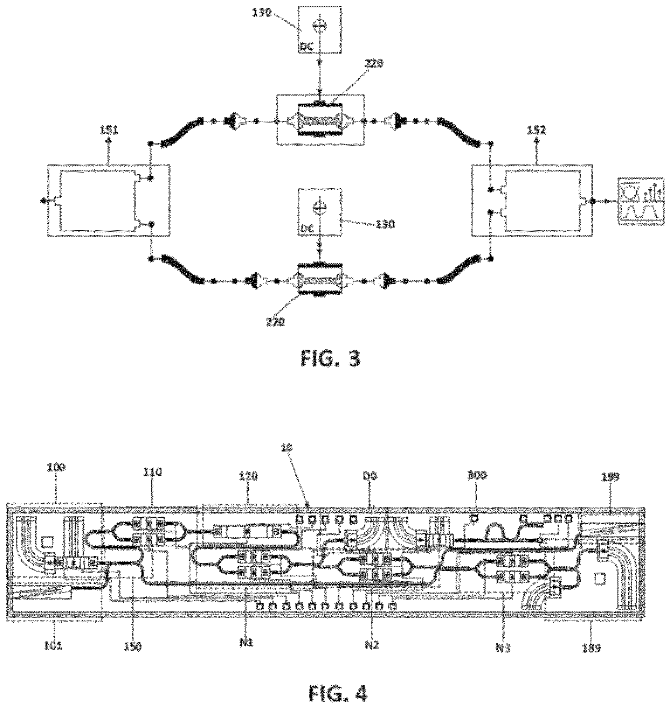

A device is proposed that is integrated, through a monolithic photonic integration process of indium phosphide, InP, in a photonic circuit or chip, with preferred dimensions of 2 mm x 12 mm, occupying only a footprint of 95% of the total surface of the chip, the remaining 5% corresponding to a test circuit. The proposed device, including both the optional components and those essential for its operation, is made up of the following components integrated into a chip (10), as indicated in Figure 1.
- An integrated optical source comprising a laser distributed feedback (100) or integrated DFB laser: In a possible embodiment, the device uses as an optical source a DFB laser centered at 1550 nm and whose maximum optical power (at one end; single side) at this length wavelength is 6 milliwatts. This laser is used continuously and a fine adjustment of +-3 nm can be made. It has a line width of 5 Mhz and an estimated maximum consumption of 150 milliamps.
   Additionally, if for some reason more power is necessary, the device can have an optical auxiliary input (101) optimized by using a spot size converter or SSC converter limiting coupling losses to less than 2 dB.
- A modulation stage including:
   - an amplitude modulator (110): Represented in Figure 3 explained in detail below, the amplitude modulator (110) is implemented by means of a balanced Mach-Zehnder interferometer, to which an electric current is applied in one of its branches. Using this method, extinction ratios greater than 20 dB and with a bandwidth greater than 25 Hz can be achieved;
   - a phase modulator (120): Extra-long standard phase modulator that can reach a phase variation of up to 3 pi.
- A plurality of power attenuators: Since drastic attenuation of the optical signal is necessary, multiple variable optical attenuators (141, 142, 143, 144) or VOA attenuators (Variable Optical Attenuator) are used. Additionally, to adjust the device to the maximum dimensions of the die or tablet (DIE; is the space reserved for the design/chip inside the wafer where the chips are made, wafer which is cut into multiple pieces according to a pattern and each piece, called a die or DIE, contains a copy of the circuit) and to the succession of passive cascade attenuations, at least one adjustable power splitter (N1, N2) is used, the structure of which is represented in Figure 2, described below, which comprises at least one fixed power splitter (151, 152) which is a multimode interferometer or MMI coupler. Instead of simply attenuating the signal, a first power splitter (151) diverts part of the signal to a first output (161) which at the same time serves as a control for power estimation or to a second output (162) which, through a second power splitter (152), it simply distributes the power between two modules of the device.
- A homodyne detector (189): An adjustable power splitter is used as the base structure of the detector, which allows the outputs of said detector to be balanced.
   In Figure 1, at least one detector (180 181, 182) is also shown comprising a photodiode (D0, D1, D2) and the detector output is the electrical output of the photodiode (D0, D1, D2), which passes to a transimpedance amplifier (190 191, 192) or TIA (Transimpedance Amplifier). The output of a first photodiode (D0), integrated in the first output (161) of the device, is used in a power estimation module (1001) to be able to check the amplitude and phase modulations and determine which powers are necessary after modulating. Optionally, an amplification module (1002) is incorporated that is used to balance the output signals of the photodiodes (D1, D2) that are in the second output (162) of the device, in such a way that they have the same power. For this purpose of power balance of the homodyne detector (189), a third variable power splitter (N3) is used that comprises a third fixed power splitter (153).
- A quantum optical output (199), optimized through the use of a spot size converter or SSC converter. The optical output (199) comprises a coupler (198) or SSC converter to reduce insertion losses. Additionally, optionally, it includes a VOA (142).

In case the optical signal is pulsed, one of the outputs of an initial splitter (150) shown in Figure 1 that is connected to the output of the source may comprise an optical delay (160).

Figure 2 shows the entire structure of the circuit that works as a variable or adjustable power splitter (N1, N2); said structure is basically the same for both a first adjustable power splitter (N1) integrated between the main optical line of the chip (10) and the first photodiode (D0) for power testing and for a second adjustable power splitter (N2) integrated between the main quantum optical output (199) and the homodyne detector (189), illustrated in Figure 4. The variable or adjustable power splitter (N1, N2), for example, 1/99 splitter at 5.5mA, comprises a first fixed power splitter (151) which is an MMI coupler 1x2 splitting the power 50/50 and a second adjustable power splitter (152) which is a 2x2 MMI. The initial configuration makes it behave like a 50/50 splitter if no control signal is applied to it. The circuit structure of this Figure 2, which is similar to that depicted in Figure 3 as explained below, further comprises two amplitude modulators (220), neither of which should be confused with the amplitude modulator (110) illustrated in Figure 1 and Figure 4 described later. Furthermore, Figures 2 and 3 represent the control signals of the active elements; said control signals correspond to a direct current generator (130) that can be adjusted to modify the working point, the direct current generator (130) being an element external to the chip that is provided to it by means of external electronics.

Figure 3 shows the entire structure of the circuit that works as an amplitude modulator (110) and which is similar to that represented in Figure 2, but the second adjustable power splitter (152), which is a 2x2 MMI coupler in the variable power splitter of Figure 2, in the amplitude modulator is a 1-2 50/50 power splitter acting as a mixer implemented by a 2x2 MMI.

In Figure 4, a test circuit (300) consisting of three photodiodes and a DFB laser is added to the chip (10), or PIC. The test circuit (300) is a test structure that can be used to study the coupling between two waveguides very close to each other, as well as for initial testing of the PIC lasers and photodiodes at both high and low frequencies.

## Claims

1. A continuous variable quantum key transmitter, **characterized by** comprising the following components integrated within a chip (10), which is a photonic integrated circuit, manufactured in indium phosphide technology:
- an integrated optical source comprising a distributed feedback laser (100) delivering an optical power signal at an output of the optical source;
- a double output consisting of an optical output (199) for an optical transmission of the quantum key and an electrical output (162) for an electrical transmission of the quantum key;
- a modulation stage connected to the output of the optical source including an amplitude modulator (110) implemented by a balanced Mach-Zehnder interferometer and a phase modulator (120), the amplitude modulator (110) and phase modulator (120) connected in series and delivering a modulated signal in an upper branch of the double output;
- an adjustable power splitter (N2) comprising at least one power splitter (151, 152) to divert part of the optical power signal to a lower branch of the double output acting as a pilot, where the part of the signal diverted to the lower branch is mixed with the modulated signal coming from the upper branch of the double output;
- a homodyne detector (189) configured to balance the optical output (199).

2. The transmitter according to any of the preceding claims, **characterized in that** the integrated optical source further comprises an optical auxiliary input (101) including a spot size converter.

3. The transmitter according to any of the preceding claims, **characterized in that** the distributed feedback laser (100) is centered at a wavelength of 1550 nm and has a maximum optical power at said wavelength of 6 milliwatts.

4. The transmitter according to any of the preceding claims, **characterized in that** the phase modulator (120) has a maximum phase variation of 3 pi.

5. The transmitter according to any of the preceding claims, **characterized in that** the optical output (199) sends an optical signal outside the chip (10) by means of a spot size converter.

6. The transmitter according to any of the preceding claims, **characterized in that** the chip (10) has 12 millimeters long by 2 millimeters wide dimensions.

7. The transmitter according to any of the preceding claims, **characterized in that** the homodyne detector (189) comprises a third fixed power splitter (153) integrated into a third variable power splitter (N3) configured to balance the power of the homodyne detector (189).

8. The transmitter according to claim 7, **characterized in that** the homodyne detector (189) further comprises at least one pair of variable optical attenuators (143, 144) at the output of the third fixed power splitter (153) and a pair of photodiodes (D1, D2) connected to the output of the variable optical attenuators (143, 144) respectively, where the electrical output of the photodiodes (D1, D2) is the electrical output (162) of the transmitter.

9. The transmitter according to claim 8, **characterized in that** the homodyne detector (189) further comprises an amplification module (1002) configured to balance the output signals of the photodiodes (D1, D2) the amplification module (1002) comprising a transimpedance amplifier (191, 192) at the output of each of the photodiodes (D1, D2) at the electrical output (162) of the transmitter.

## Patentansprüche

1. Ein Quantenschlüsselsender mit kontinuierlichen Variablen, **dadurch gekennzeichnet, dass** er die folgenden Komponenten umfasst, die in einem Chip (10) integriert sind, der eine photonische integrierte Schaltung ist, die in Indiumphosphidtechnologie hergestellt ist:
- eine integrierte optische Quelle, die einen verteilten Rückkopplungslaser (100) umfasst, der ein optisches Leistungssignal an einem Ausgang der optischen Quelle bereitstellt;
- einen doppelten Ausgang, bestehend aus einem optischen Ausgang (199) für eine optische Übertragung des Quantenschlüssels und einem elektrischen Ausgang (162) für eine elektrische Übertragung des Quantenschlüssels;
- eine mit dem Ausgang der optischen Quelle verbundene Modulationsstufe, die einen durch ein ausgeglichenes Mach-Zehnder-Interferometer realisierten Amplitudenmodulator (110), und einen Phasenmodulator (120) umfasst, wobei der Amplitudenmodulator (110) und der Phasenmodulator (120) in Reihe geschaltet sind und ein moduliertes Signal in einem oberen Zweig des doppelten Ausgangs bereitstellen;
- einen einstellbaren Leistungsteiler (N2), der mindestens einen Leistungsteiler (151, 152) aufweist, um einen Teil des optischen Leistungssignals zu einem unteren Zweig des doppelten Ausgangs umzuleiten, der als ein Steuergerät wirkt, an dem der Teil des Signals, der zu dem unteren Zweig geleitet wird, mit dem modulierten Signal gemischt wird, das von dem oberen Zweig des doppelten Ausgangs kommt;
- einen Homodyndetektor (189), der konfiguriert ist, um den optischen Ausgang (199) auszugleichen.

2. Der Sender nach einem der vorhergehenden Ansprüche, **dadurch gekennzeichnet, dass** die integrierte optische Quelle ferner einen optischen Hilfseingang (101) mit einem Spotgrößenkonverter umfasst.

3. Der Sender nach einem der vorhergehenden Ansprüche, **dadurch gekennzeichnet, dass** der verteilte Rückkopplungslaser (100) bei einer Wellenlänge von 1550 nm zentriert ist und eine maximale optische Leistung bei der Wellenlänge von 6 Milliwatt aufweist.

4. Der Sender nach einem der vorhergehenden Ansprüche, **dadurch gekennzeichnet, dass** der Phasenmodulator (120) eine maximale Phasenvariation von 3 pi aufweist.

5. Der Sender nach einem der vorhergehenden Ansprüche, **dadurch gekennzeichnet, dass** der optische Ausgang (199) ein optisches Signal außerhalb des Chips (10) mittels eines Spotgrößenkonverters sendet.

6. Der Sender nach einem der vorhergehenden Ansprüche, **dadurch gekennzeichnet, dass** der Chip (10) 12 Millimeter lang und 2 Millimeter breit ist.

7. Der Sender nach einem der vorhergehenden Ansprüche, **dadurch gekennzeichnet, dass** der Homodyndetektor (189) einen in einen dritten variablen Leistungsteiler (N3) integrierten dritten festen Leistungsteiler (153) umfasst, der konfiguriert ist, um die Leistung des Homodyndetektors (189) auszugleichen.

8. Der Sender nach Anspruch 7, **dadurch gekennzeichnet, dass** der Homodyndetektor (189) ferner mindestens ein Paar von variablen optischen Dämpfungsgliedern (143, 144) am Ausgang des dritten festen Leistungsteilers (153) und ein Paar von Photodioden (D1, D2) umfasst, die jeweils mit dem Ausgang der variablen optischen Dämpfungsglieder (143, 144) verbunden sind, an welchen der elektrische Ausgang der Photodioden (D1, D2) der elektrische Ausgang (162) des Senders ist.

9. Der Sender nach Anspruch 8, **dadurch gekennzeichnet, dass** der Homodyndetektor (189) ferner ein Verstärkungsmodul (1002) umfasst, das konfiguriert ist, um die Ausgangssignale der Photodioden (D1, D2) auszugleichen, wobei das Verstärkungsmodul (1002) einen Transimpedanzverstärker (191, 192) am Ausgang jeder der Photodioden (D1, D2) am elektrischen Ausgang (162) des Senders umfasst.

## Revendications

1. Émetteur de clé quantique à variable continue, **caractérisé en ce qu'**il comprend les composants suivants intégrés dans une puce (10), qui est un circuit intégré photonique, fabriqué en technologie à phosphure d'indium :
- une source optique intégrée comprenant un laser à rétroaction répartie (100) délivrant un signal de puissance optique à une sortie de la source optique ;
- une double sortie comprenant une sortie optique (199) pour une transmission optique de la clé quantique et une sortie électrique (162) pour une transmission électrique de la clé quantique ;
- un étage de modulation connecté à la sortie de la source optique incluant un modulateur d'amplitude (110) réalisé par un interféromètre de Mach-Zehnder équilibré et un modulateur de phase (120), le modulateur d'amplitude (110) et le modulateur de phase (120) étant connectés en série et délivrant un signal modulé dans une branche supérieure de la double sortie ;
- un diviseur de puissance ajustable (N2) comprenant au moins un diviseur de puissance (151, 152) destiné à détourner une partie du signal de puissance optique vers une branche inférieure de la double sortie agissant comme pilote, où la partie du signal détournée vers la branche inférieure est mélangée avec le signal modulé provenant de la branche supérieure de la double sortie ;
- un détecteur homodyne (189) configuré pour équilibrer la sortie optique (199).

2. Émetteur selon l'une quelconque des revendications précédentes, **caractérisé en ce que** la source optique intégrée comprend en outre une entrée auxiliaire optique (101) incluant un convertisseur de taille de point.

3. Émetteur selon l'une quelconque des revendications précédentes, **caractérisé en ce que** le laser à rétroaction répartie (100) est centré sur une longueur d'onde de 1550 nm et présente une puissance optique maximale à ladite longueur d'onde de 6 milliwatts.

4. Émetteur selon l'une quelconque des revendications précédentes, **caractérisé en ce que** le modulateur de phase (120) présente une variation de phase maximale de 3 pi.

5. Émetteur selon l'une quelconque des revendications précédentes, **caractérisé en ce que** la sortie optique (199) envoie un signal optique à l'extérieur de la puce (10) au moyen d'un convertisseur de taille de point.

6. Émetteur selon l'une quelconque des revendications précédentes, **caractérisé en ce que** la puce (10) présente des dimensions de 12 millimètres de long sur 2 millimètres de large.

7. Émetteur selon l'une quelconque des revendications précédentes, **caractérisé en ce que** le détecteur homodyne (189) comprend un troisième diviseur de puissance fixe (153) intégré dans un troisième diviseur de puissance variable (N3) configuré pour équilibrer la puissance du détecteur homodyne (189).

8. Émetteur selon la revendication 7, **caractérisé en ce que** le détecteur homodyne (189) comprend en outre au moins une paire d'atténuateurs optiques variables (143, 144) à la sortie du troisième diviseur de puissance fixe (153) et une paire de photodiodes (D1, D2) connectées respectivement à la sortie des atténuateurs optiques variables (143, 144), où la sortie électrique des photodiodes (D1, D2) constitue la sortie électrique (162) de l'émetteur.

9. Émetteur selon la revendication 8, **caractérisé en ce que** le détecteur homodyne (189) comprend en outre un module d'amplification (1002) configuré pour équilibrer les signaux de sortie des photodiodes (D1, D2), le module d'amplification (1002) comprenant un amplificateur transimpédance (191, 192) à la sortie de chacune des photodiodes (D1, D2) à la sortie électrique (162) de l'émetteur.
